# FASCICULE DE BREVET EUROPEEN

(11) **EP 2 620 356 B1**
(45) Date de publication et mention de la délivrance du brevet: **13.07.2016**
(21) Numéro de dépôt: 13150516.6
(22) Date de dépôt: 08.01.2013
(51) Int. Cl.: B62D 67/00, B09B 3/00

(54) **Procédé de gestion d'une ligne de traitement industriel de véhicules automobiles hors d'usage**
Verfahren zur Steuerung einer industriellen Verarbeitungslinie von Altfahrzeugen
Method for managing a line for industrial treatment of end-of-life automobiles

(30) Priorité: 27.01.2012 FR 1250798
(43) Date de publication de la demande: 31.07.2013
(73) Titulaire: Materials Technologies, 49110 Le-Pin-en-Mauges (FR)
(72) Inventeur: Coudamy, Gérard, 87000 Limoges (FR); Jaubert, Yann, 78350 Jouy en Josas (FR)
(74) Mandataire: Laget, Jean-Loup

(56) Documents cités:
- DE-A1- 4 333 632
- DE-A1- 19 962 266
- US-A1- 2007 124 906

## Description

La présente invention concerne un procédé de gestion d'une ligne de traitement industriel de véhicules automobiles hors d'usage en vue de la récupération d'une part des éléments et substances qui peuvent représenter un danger pour l'environnement, et d'autre part des éléments qui après tri peuvent être valorisés. Les véhicules à traiter sont des véhicules légers pesant jusqu'à environ deux tonnes.

Ainsi, tous les éléments et substances potentiellement dangereux doivent avant compression ou broyage être récupérés pour être ensuite séparément collectés et subir un traitement adapté selon la règlementation en vigueur. Il s'agit, entre autres, des catalyseurs, du filtre à particules, et des liquides présents à des endroits différents dans les véhicules.

Des lignes de traitement de véhicules hors d'usage sont connues dans lesquelles un certain nombre de postes spécialisés sont disposés en série les uns après les autres. Une telle ligne est décrite dans la publication FR2760389. La ligne comporte par exemple six postes de travail disposés en série comportant un système respectif de manutention-préhension de véhicules réalisé sous forme d'une potence. Le véhicule est transféré entre les divers postes de travail, notamment par un chariot élévateur. Cependant, ce document ne donne aucune indication comment procéder pour gérer la ligne de manière à obtenir une cadence sensiblement régulière des véhicules sur l'ensemble de la ligne.

Un procédé de gestion d'une ligne de traitement de véhicules hors d'usage est également connu de la publication EP0299812. Cette ligne de traitement est en premier lieu destinée à la récupération et au recyclage de pièces détachées en vue de leur valorisation économique. Cette ligne comprend un nombre de postes spécialisés disposés en série et les véhicules sont déplacés entre les postes par un convoyeur aérien. La ligne s'étend sur trois étages. Les véhicules sont admis au 2^{ième} étage pour être testés dans un poste de test et triés pour être ensuite placés dans une zone d'accumulation en attente d'être descendus au 1^{er} étage qui comporte des postes de démontage. Une presse et des casiers recevant les pièces détachées sont disposés au rez-de-chaussée.

Le poste de test et de tri est suivi par un poste de récupération des liquides, notamment des huiles et graisses, de l'essence, de l'eau avec antigel. Ce poste de récupération des liquides peut être désigné comme un poste de dépollution.

Un poste de démontage est disposé en aval du poste de récupération des liquides pour le démontage de toutes les pièces, hormis moteur, boîte de vitesse, pont et roues, ce démontage étant effectué par le même opérateur. Vu la grande variabilité des temps de démontage, il est prévu de mettre en parallèle un nombre minimum de postes de démontage alimentés à la demande de chacun des opérateurs de ces postes. Cet agencement nécessite ainsi une zone d'accumulation se trouvant immédiatement en amont de ces postes. Dans l'exemple donné dans cette publication, en tout huit zones d'accumulation se trouvent à des niveaux différents de la ligne.

Contrairement à la ligne de traitement de véhicules hors d'usage décrite dans la publication EP0299812, la ligne de traitement selon l'invention de véhicules hors d'usage n'a pas pour objet de récupérer des pièces de rechange en vue de leur vente, mais de permettre la valorisation des matières premières récupérables.

Un procédé de gestion d'une ligne de traitement industriel de véhicules automobiles hors d'usage selon le préambule de la revendication 1 est connu du document DE 43 33 632 A1.

Le but de l'invention est de proposer un procédé de gestion d'une ligne de traitement de véhicules hors d'usage qui permet une augmentation d'au moins 50% de la productivité par rapport aux procédés connus qui en général nécessitent des zones d'accumulation des véhicules à plusieurs endroits le long de la ligne. Le procédé selon l'invention est dans ce but mis en oeuvre dans des postes de travail ergonomiques tout en assurant un travail en sécurité des opérateurs. Grâce au procédé selon l'invention, la cadence de traitement des véhicules est sensiblement régulière sur l'ensemble de la ligne et aucune zone d'accumulation des véhicules n'est nécessaire.

Un autre but de l'invention est de proposer un procédé de gestion d'une ligne de traitement de véhicules automobiles hors d'usage qui est flexible et facilement modifiable en fonction du besoin ou de la règlementation.

L'objet de l'invention est un procédé de gestion d'une ligne de traitement industriel de véhicules automobiles hors d'usage qui comprend au moins les postes suivants disposés en série :
- un poste de chargement individuel des véhicules sur un convoyeur ;
- un poste de retrait de la batterie ;
- un poste de retrait des roues ;
- un poste de dépollution des fluides ;
- un poste de retrait du pot catalytique et/ou du filtre à particules ;
- un poste de déchargement des véhicules du convoyeur en vue d'une compression ou d'un broyage, caractérisé en ce que
chaque poste est adapté pour traiter un nombre déterminé *n* de véhicules par heure, et que le poste de dépollution des fluides est composé d'un nombre suffisant x de postes du même genre disposés en parallèle pour assurer conjointement le traitement de *n* véhicules par heure de manière à obtenir une cadence de traitement des véhicules sensiblement régulière sur l'ensemble de la ligne.

Selon d'autres caractéristiques de l'invention :
- ledit nombre x de postes du même genre dont est composé le poste de dépollution des fluides est calculé à partir du temps moyen nécessaire de traitement d'un véhicule dans un poste de dépollution des fluides, en comparaison avec le temps moyen le plus élevé de traitement d'un véhicule dans chacun des autres postes de la ligne ;
- chaque véhicule est au poste de chargement disposé sur une plateforme dudit convoyeur déplaçable du poste de chargement jusqu'au poste de déchargement des véhicules ;
- immédiatement avant le poste de dépollution des fluides, la plateforme est disposée sur un transbordeur se déplaçant dans le sens transversal par rapport à une partie de la ligne immédiatement en amont pour le transfert de la plateforme avec un véhicule devant être traité dans un poste libre parmi les postes de dépollution des fluides disposés en parallèle, et pour recevoir une plateforme avec un véhicule traité dans un poste de dépollution des fluides pour le transfert de la plateforme vers une partie de la ligne se trouvant en aval du poste de dépollution des fluides.
- les dispositifs pyrotechniques des airbags et des prétensionneurs des ceintures de sécurité sont détruits dans un poste de neutralisation sécurisée intégré dans la ligne de traitement industriel ;
- le pare-brise et la lunette arrière des véhicules sont enlevés dans un poste supplémentaire intégré dans la ligne de traitement industriel ;
- les vitres latérales des véhicules sont éclatées par déformation brutale du toit des véhicules dans un poste supplémentaire sécurisé disposé en aval du poste d'enlèvement du pare-brise et de la lunette arrière ;
- vers la fin de la ligne, le toit des véhicules est découpé dans un poste supplémentaire de découpe du toit, et un poste supplémentaire d'enlèvement des sièges est prévu en aval du poste de découpe du toit ;
- un poste supplémentaire d'enlèvement du tableau de bord des véhicules est prévu en aval du poste de découpe du toit ;
- le moteur est enlevé dans un poste supplémentaire intégré dans la ligne de traitement industriel ;
- la boîte de vitesses et/ou les organes de transmission des véhicules sont enlevés dans un poste supplémentaire intégré dans la ligne de traitement industriel ; et
- le véhicule est dans le poste de chargement disposé sur deux poutres de support transversales amovibles reposant sur ladite plateforme et utilisées pour soulever le véhicule dans le poste de dépollution des fluides en coopérant avec deux colonnes de levage se trouvant alors de part et d'autre de la plateforme.

D'autres caractéristiques et avantages de l'invention ressortiront de la description qui va suivre d'un exemple d'un mode de mise en oeuvre non limitatif du procédé selon l'invention, en référence aux figures annexées dans lesquelles :
- la figure 1 est une vue d'ensemble schématique d'une ligne de traitement de véhicules automobiles hors d'usage dans laquelle le procédé selon l'invention est mis en oeuvre;
- la figure 2 est une vue schématique en perspective montrant un véhicule dans un poste de retrait des roues ;
- la figure 3 est une vue schématique en perspective montrant un véhicule dans un poste de dépollution des fluides ;
- la figure 4 est une vue schématique en perspective montrant un véhicule dans un poste de retrait du pot catalytique et/ou du filtre à particules ; et
- la figure 5 est une vue schématique en perspective montrant un véhicule dans un poste d'enlèvement des véhicules d'un convoyeur pour leur transfert direct dans un poste de compression.

Dans les figures, les éléments identiques ou équivalents porteront les mêmes signes de référence.

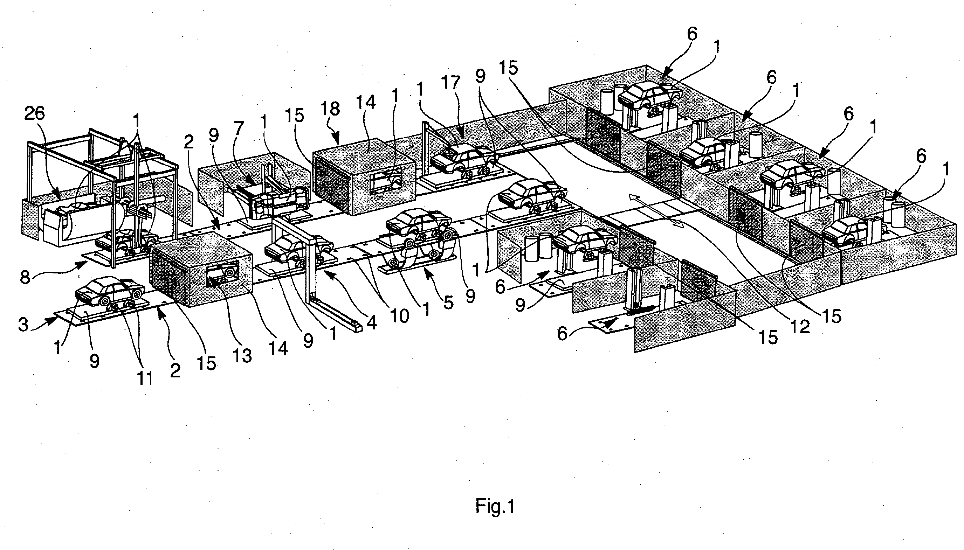

Le procédé de gestion selon l'invention est mis en oeuvre dans une ligne de traitement industriel de véhicules automobiles hors d'usage 1 transportés le long de la ligne à l'aide d'un convoyeur 2 dont le tracé est schématiquement montré à la figure 1. Cette ligne comporte au moins les postes suivants disposés en série :
- un poste de chargement individuel 3 des véhicules 1 sur un convoyeur 2 ;
- un poste de retrait de la batterie 4 ;
- un poste de retrait des roues 5 ;
- un poste de dépollution des fluides 6 ;
- un poste de retrait du pot catalytique et/ou du filtre à particules 7;
- un poste de déchargement 8 des véhicules 1 du convoyeur 2 en vue d'une compression ou d'un broyage.

Selon l'invention, chaque poste est adapté pour traiter un nombre déterminé n de véhicules par heure. Une cadence de traitement des véhicules sensiblement régulière est ainsi obtenue sur l'ensemble de la ligne.

On a pu constater que le temps de traitement d'un véhicule ne varie pas beaucoup dans un même poste, à l'exception du poste de dépollution des fluides. Ce poste est prévu pour récupérer les liquides, à savoir l'huile du moteur, de l'embrayage, de la boîte de vitesse, de la suspension, des amortisseurs, mais aussi le carburant, le liquide lave-glace, le liquide de frein, et aussi, le cas échéant, le fluide frigorigène du climatiseur.

Cette phase de récupération des liquides demande beaucoup de temps pour sa mise en oeuvre, d'autant plus que ces liquides sont vidés par une combinaison d'écoulement par gravité et aspiration. En outre, le temps de traitement varie fortement d'un véhicule à un autre.

Les liquides dans le compartiment moteur sont accessibles par le haut, avec le capot du véhicule ouvert, alors que les autres liquides sont accessibles par le dessous et chaque véhicule est dans ce but soulevé dans le poste de dépollution des fluides à l'aide d'un dispositif élévateur. Le temps moyen nécessaire pour l'ensemble des opérations par poste de dépollution des fluides est d'environ 10' (dix minutes) par véhicule avec un seul opérateur assisté par un système de perçage et de réception de tous les liquides du véhicule.

On a pu constater que le temps moyen de traitement d'un véhicule dans plusieurs des autres postes est avec un seul opérateur d'environ 1'40", ce qui est aussi le temps moyen le plus élevé, alors que le temps moyen au poste de retrait du pot catalytique et/ou du filtre à particules est de 1'10", ce qui correspond au temps moyen le moins élevé.

Afin de limiter le temps moyen de traitement au poste de retrait des roues à 1'40", il est cependant nécessaire de prévoir deux opérateurs qui desservent ce poste, un de chaque côté.

Ainsi, pour adapter le poste de dépollution des fluides dans lequel le temps de traitement est très variable et le temps moyen de traitement est beaucoup plus élevé que dans les autres postes dans lesquels le temps moyen de traitement le plus élevé correspond à environ 1'40", le poste de dépollution des fluides est composé d'un nombre x de postes du même genre disposés en parallèle pour assurer conjointement le traitement de *n* véhicules par heure. Dans l'exemple avec un temps moyen de traitement dans un poste de dépollution des fluides de 10' et un temps moyen de traitement le plus élevé d'environ 1'40" dans les autres postes, on arrive donc à la conclusion qu'il faut 6 postes de dépollution des fluides en parallèle pour traiter le nombre déterminé n de véhicules par heure et pour ainsi obtenir une cadence de traitement sensiblement régulière sur l'ensemble de la ligne.

Dans cet exemple qui correspond à une variante de base, on obtient ainsi grâce à la gestion de la ligne de traitement de véhicules hors d'usage selon l'invention, une cadence de traitement d'environ 30 véhicules par heure en prenant aussi en compte le temps de déplacement des véhicules d'un poste au poste suivant le long de la ligne de traitement.

Afin de réduire ce temps de déplacement des véhicules d'un poste au poste suivant et pour sécuriser ce déplacement, chaque véhicule est au poste de chargement 3 disposé, par exemple à l'aide d'un chariot élévateur, sur une plateforme respective 9 du convoyeur 2. Les plateformes 9 sont déplacées le long de la ligne de traitement par des roues d'entraînement (non représentées) et elles sont guidées sur tout le trajet par des roues libres de guidage 10 prévues dans le sol le long de la ligne.

Grâce à l'absence de rails, qu'ils soient prévus dans le sol ou suspendus au plafond du bâtiment, le passage entre les postes est facilité et sécurisé. L'utilisation des plateformes apportent plusieurs avantages en constituant un support universel quel que soit le véhicule et son état. La circulation autour des véhicules dans les postes peut être faite en toute sécurité et les positions d'arrêt dans les postes sont précises et répétitives. En outre, ce convoyage est particulièrement silencieux et fiable.

Dans le poste de chargement 3, chaque véhicule est disposé sur deux poutres de support transversales amovibles 11 qui reposent sur la plateforme 9. De cette manière, le véhicule 1 est stabilisé sur la plateforme lors du déplacement de celle-ci le long de la ligne de traitement.

Pour le transfert des plateformes 9 vers l'un ou l'autre des postes de dépollution des fluides disposés en parallèle, un transbordeur 12 est prévu à l'extrémité avale d'un premier tronçon de la ligne de traitement. Ce transbordeur 12 est apte à recevoir une plateforme 9 avec un véhicule placé sur celui-ci pour la déplacer dans un sens transversal par rapport à la plateforme afin de la transférer dans un poste libre parmi les postes de dépollution des fluides ou bien pour chercher une plateforme avec un véhicule traité afin de la transférer vers un deuxième tronçon de la ligne de traitement en aval du poste de dépollution pour la suite du traitement.

Le procédé de gestion d'une ligne de traitement industriel de véhicules hors d'usage selon l'invention est extrêmement flexible et permet l'ajout d'autres postes de traitement selon les besoins ou bien en fonction de modifications de la législation en vigueur. Cela peut se faire sans aucune influence sur la cadence de la ligne de traitement dans son ensemble.

Depuis des années, pratiquement tous les véhicules sont équipés d'airbags et de prétensionneurs des ceintures de sécurité. Les airbags sont, lors d'un choc violent, aptes à gonfler instantanément pour réduire l'effet du choc sur les personnes se trouvant à des places exposés dans le véhicule, en premier lieu le conducteur et le passager se trouvant à côté de lui. Or, le gonflement de ces airbags est déclenché par des dispositifs pyrotechniques à explosifs qui lors du traitement des véhicules risquent d'exploser et constituent ainsi un danger pour l'entourage. De même, les prétensionneurs sont déclenchés à l'aide de dispositifs pyrotechniques au moment d'une collision.

Pour cette raison, l'invention propose d'intégrer un poste de neutralisation 13 des dispositifs pyrotechniques des airbags et des prétensionneurs au début de la ligne de traitement, de préférence immédiatement en aval du poste de chargement 3. Ce poste de neutralisation comporte une commande de mise à feu à distance des dispositifs pyrotechniques qui peut être branchée sur une prise commune de ces dispositifs. Ce poste de neutralisation est placé dans un box insonorisé et ventilé fermé par deux portes à rideau opposées 15.

La ligne de traitement de véhicules hors d'usage pour la mise en oeuvre du procédé selon l'invention comporte avantageusement en outre un poste 17 d'enlèvement du pare-brise et de la lunette arrière des véhicules, et en aval de celui-ci, un poste 18 d'éclatement des vitres latérales des véhicules.

Le poste 17 d'enlèvement du pare-brise et de la lunette arrière est de préférence équipé d'outils pour la découpe de ceux-ci et d'une potence de soulèvement de ces éléments à l'aide de ventouses.

Le poste 18 d'éclatement des vitres latérales des véhicules est disposé dans un box insonorisé et ventilé 14 fermé par deux portes à rideau opposées 15. Les vitres latérales sont éclatées à l'aide d'un poinçon hydraulique (non représenté) qui vient enfoncer le toit des véhicules. Des convoyeurs (non représentés) sont prévus pour l'évacuation des débris de verre.

Les postes 17 et 18 sont de préférence disposés en aval des postes de dépollution des fluides 6 et en tout cas en amont du poste de retrait du pot catalytique et/ou du filtre à particules 7 pour éviter des bris de glace dans ce poste où le véhicule est mis sur le côté.

Le procédé selon l'invention permet sans difficulté l'intégration d'autres postes, sans que cela ait une influence sur la cadence de l'ensemble de la ligne.

Ainsi, on peut aussi prévoir un poste d'enlèvement du moteur et un poste d'enlèvement de la boîte de vitesse (non représentés) pour un traitement séparé à la sortie de la ligne de traitement. L'enlèvement du moteur et de la boîte de vitesses peut être effectué par arrachage à l'aide de robots (non représentés).

Il est également avantageux de prévoir un poste d'enlèvement des sièges et un poste d'enlèvement du tableau de bord (non représentés). Afin de donner libre accès aux sièges et au tableau de bord, le toit est de préférence enlevé dans un poste disposé en amont de ces deux postes et l'enlèvement des sièges et du tableau de bord peut ensuite être effectué par arrachement à l'aide de robots (non représentés).

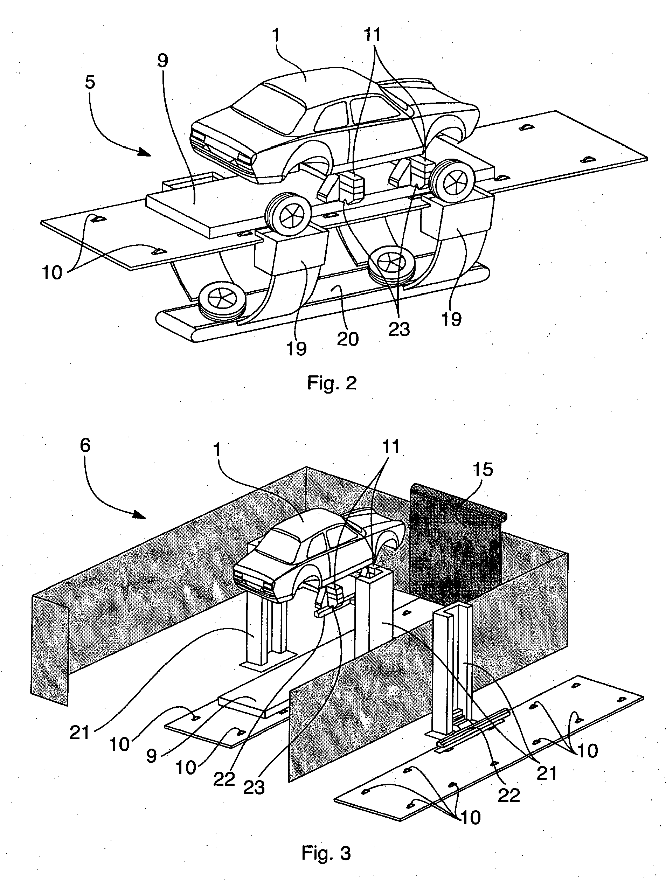

Les figures 2 à 5 montrent plus en détail quatre postes de traitement.

La figure 2 montre schématiquement le poste de retrait de roues 5. Ce poste est desservi par deux opérateurs équipés d'une déboulonneuse respective (non représentée). Après déboulonnage, les roues tombent dans des goulottes 19 pour être prises en charge par des convoyeurs à bande 20 disposés en-dessous de la ligne de traitement. A ce niveau, un autre poste (non représenté) peut être prévu pour le démontage des roues destiné à séparer les jantes des pneumatiques et éventuellement à effectuer un pré-broyage de ces derniers.

La figure 3 montre schématiquement un poste de dépollution des fluides 6 fermé au moins sur les côtés latéraux et pourvu d'une porte à rideau 15 vers le transbordeur 12. Ce poste comporte un élévateur à deux colonnes de levage 21. Comme déjà mentionné, le véhicule est dans le poste de chargement disposé sur deux poutres de support transversales amovibles 11 reposant sur la plateforme 9. Ces poutres sont utilisées dans ce poste pour soulever le véhicule en coopérant avec les deux colonnes de levage 21 se trouvant alors de part et d'autre de la plateforme 9. Chaque colonne de levage 21 comporte dans ce but un organe de levage en T 22 qui vient se loger dans des échancrures 23 effectuées aux extrémités des poutres de support 11 qui font saillie de part et d'autre de la plateforme 9. Les extrémités des poutres 11 sont par ailleurs déviées vers le bas pour se placer contre un bord latéral respectif de la plateforme de manière à bloquer les poutres dans le sens transversal sur la plateforme.

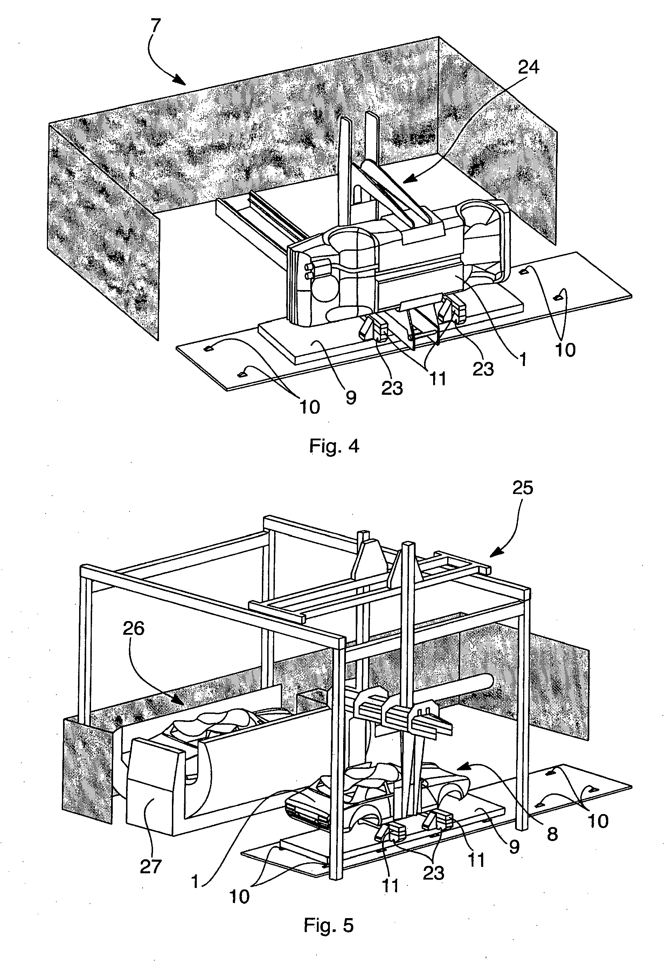

La figure 4 montre schématiquement le poste 7 de retrait du pot catalytique et/ou du filtre à particules. Ce poste comporte un basculeur / translateur 24 qui met le véhicule sur le côté pour donner un accès facile à la ligne d'échappement. Ce poste est desservi par un seul opérateur équipé d'une cisaille hydraulique (non représentée) pour couper la ligne d'échappement et les supports.

La figure 5 montre schématiquement le poste de déchargement 8. Ce poste est desservi par un seul opérateur à l'aide d'un pont de manutention 25 afin de placer le véhicule 1 dans un poste de compression juxtaposé 26 dans le cas où les véhicules doivent être comprimés pour le transport et le broyage ultérieur dans un autre site. Le poste de compression comporte une presse hydraulique 27.

Si par contre un broyage des véhicules est envisagé directement à la sortie de la ligne de traitement, les véhicules peuvent être déplacés à l'aide d'un chariot élévateur pour être entre-stockés à un autre endroit en attente d'être broyés pour un tri ultérieur des différents éléments récupérables pour leur valorisation.

Les plateformes vides 9 peuvent suite au poste de déchargement 8 être déplacées vers le poste de chargement 3 pour un nouveau cycle le long de la ligne de traitement. Ce déplacement peut par exemple être effectué à l'aide d'un transbordeur du même genre qui celui décrit pour les postes de dépollutions des fluides 6.

Un autre avantage de l'invention est que toute la ligne se trouve à un seul niveau et on évite ainsi d'avoir à faire monter et descendre les véhicules entres des étages différents, ce qui nécessite un bâtiment complexe et onéreux.

Bien entendu, le procédé de gestion selon l'invention n'est pas limité au mode de réalisation illustré et décrit, mais peut être appliquée à une ligne de traitement de véhicules hors d'usage comprenant une multiplication du nombre de postes.

## Revendications

1. Procédé de gestion d'une ligne de traitement industriel de véhicules automobiles hors d'usage (1) qui comprend au moins les postes suivants disposés en série :
- un poste (3) de chargement individuel des véhicules (1) sur un convoyeur (2) ;
- un poste (4) de retrait de la batterie ;
- un poste (5) de retrait des roues ;
- un poste (6) de dépollution des fluides ;
- un poste (7) de retrait du pot catalytique et/ou du filtre à particules ;
- un poste (8) de déchargement des véhicules (1) du convoyeur (2) en vue d'une compression ou d'un broyage
**caractérisé en ce que**
chaque poste (3 à 8) est adapté pour traiter un nombre déterminé n de véhicules (1) par heure, et que le poste de dépollution des fluides (6) est composé d'un nombre suffisant x de postes du même genre disposés en parallèle pour assurer conjointement le traitement de *n* véhicules par heure de manière à obtenir une cadence de traitement des véhicules sensiblement régulière sur l'ensemble de la ligne.

2. Procédé selon la revendication 1, **caractérisé en ce que** ledit nombre x de postes du même genre dont est composé le poste de dépollution des fluides (6) est calculé à partir du temps moyen nécessaire de traitement d'un véhicule dans un poste de dépollution des fluides, en comparaison avec le temps moyen le plus élevé de traitement d'un véhicule dans chacun des autres postes (3 à 5, 7 à 8) de la ligne.

3. Procédé selon l'une quelconque des revendications précédentes, **caractérisé en ce que** chaque véhicule (1) est au poste de chargement (3) disposé sur une plateforme (9) dudit convoyeur (2) déplaçable du poste de chargement (3) jusqu'au poste de déchargement (8) des véhicules (1).

4. Procédé selon la revendication 3, **caractérisé en ce qu'**immédiatement avant le poste de dépollution des fluides (6), la plateforme (9) est disposée sur un transbordeur (12) se déplaçant dans le sens transversal par rapport à une partie de la ligne immédiatement en amont pour le transfert de la plateforme (9) avec un véhicule (1) devant être traité dans un poste libre parmi les postes de dépollution des fluides (6) disposés en parallèle, et pour recevoir une plateforme (9) avec un véhicule (1) traité dans un poste de dépollution des fluides (6) pour le transfert de la plateforme (9) vers une partie de la ligne se trouvant en aval du poste de dépollution des fluides (6).

5. Procédé selon l'une quelconque des revendications précédentes, **caractérisé en ce que** les dispositifs pyrotechniques des airbags et des prétensionneurs des ceintures de sécurité sont détruits dans un poste (13) de neutralisation sécurisée intégré dans la ligne de traitement industriel.

6. Procédé selon l'une quelconque des revendications précédentes, **caractérisé en ce que** le pare-brise et la lunette arrière des véhicules (1) sont enlevés dans un poste supplémentaire (17) intégré dans la ligne de traitement industriel.

7. Procédé selon la revendication 6, **caractérisé en ce que** les vitres latérales des véhicules (1) sont éclatées par déformation brutale du toit des véhicules dans un poste supplémentaire sécurisé (18) disposé en aval du poste (17) d'enlèvement du pare-brise et de la lunette arrière.

8. Procédé selon l'une quelconque des revendications précédentes, **caractérisé en ce que** vers la fin de la ligne, le toit des véhicules (1) est découpé dans un poste supplémentaire de découpe du toit, et **en ce qu'**un poste supplémentaire d'enlèvement des sièges est prévu en aval du poste de découpe du toit.

9. Procédé selon la revendication 8, **caractérisé en ce qu'**un poste supplémentaire d'enlèvement du tableau de bord des véhicules (1) est prévu en aval du poste de découpe du toit.

10. Procédé selon l'une quelconque des revendications précédentes, **caractérisé en ce que** le moteur des véhicules (1) est enlevé dans un poste supplémentaire intégré dans la ligne de traitement industriel.

11. Procédé selon l'une quelconque des revendications précédentes, **caractérisé en ce que** la boîte de vitesses et les organes de transmission des véhicules (1) sont enlevés dans un poste supplémentaire intégré dans la ligne de traitement industriel.

12. Procédé selon l'une quelconque des revendications 3 à 11, **caractérisé en ce que** le véhicule est dans le poste de chargement (3) disposé sur deux poutres de support transversales amovibles (11) reposant sur la plateforme (9) et utilisées pour soulever le véhicule (1) dans le poste de dépollution des fluides (6) en coopérant avec deux colonnes de levage (21) se trouvant alors de part et d'autre de la plateforme (9).

## Patentansprüche

1. Verfahren zur Steuerung einer Linie zur industriellen Verarbeitung von außer Dienst gestellten Kraftfahrzeugen (1), die mindestens die folgenden, in Reihe angeordneten Arbeitsstationen umfasst:
- eine Station (3) für das individuelle Beladen eines Förderbands (2) mit Fahrzeugen (1),
- eine Station (4) für das Ausbauen der Batterie,
- eine Station (5) für das Abbauen der Räder,
- eine Station (6) für die Rückgewinnung der Fluide,
- eine Station (7) für das Ausbauen des Katalysators und/oder des Partikelfilters,
- eine Station (8) für das Abladen der Fahrzeuge (1) vom Förderband (2) zum Komprimieren oder Zerkleinern,
**dadurch gekennzeichnet, dass**
jede Station (3 bis 8) angepasst ist, um eine bestimmte Anzahl *n* von Fahrzeugen (1) pro Stunde zu verarbeiten, und dass die Station für die Rückgewinnung der Fluide (6) aus einer ausreichenden Anzahl x von Stationen der gleichen Art zusammengesetzt ist, die parallel angeordnet sind, um gleichzeitig die Verarbeitung von n Fahrzeugen pro Stunde zu sichern, um auf der gesamten Linie einen etwa gleichmäßigen Fahrzeugverarbeitungsrhythmus zu erhalten.

2. Verfahren nach Anspruch 1, **dadurch gekennzeichnet, dass** die Anzahl x von Stationen derselben Art, aus denen sich die Station für die Rückgewinnung der Fluide (6) zusammensetzt, ausgehend von der Zeit, die durchschnittlich für die Verarbeitung eines Fahrzeugs in einer Station für die Rückgewinnung der Fluide notwendig ist, im Vergleich mit der durchschnittlich längsten Verarbeitungszeit eines Fahrzeugs in jeder der anderen Stationen (3 bis 5, 7 bis 8) der Linie berechnet ist.

3. Verfahren nach einem der vorangehenden Ansprüche, **dadurch gekennzeichnet, dass** jedes Fahrzeug (1) in der Beladestation (3) auf eine Plattform (9) des Förderbands (2) gestellt wird, die von der Beladestation (3) bis zur Abladestation (8) der Fahrzeuge (1) verlagerbar ist.

4. Verfahren nach Anspruch 3, **dadurch gekennzeichnet, dass** die Plattform (9) unmittelbar vor der Station für die Rückgewinnung der Fluide (6) auf einen Umsetzer (12) verlagert wird, der sich im Verhältnis zur einem Abschnitt der Linie unmittelbar davor für den Transfer der Plattform (9) mit einem Fahrzeug (1), das in einer freien Station der parallel angeordneten Stationen für die Rückgewinnung der Fluide (6) verarbeitet werden muss, und für den Empfang einer Plattform (9) mit einem in einer Station für die Rückgewinnung der Fluide (6) verarbeiteten Fahrzeug (1) für den Transfer der Plattform (9) zu einem Abschnitt der Linie, der sich nach der Station für die Rückgewinnung der Fluide (6) befindet, in eine Querrichtung verlagert.

5. Verfahren nach einem der vorangehenden Ansprüche, **dadurch gekennzeichnet, dass** die pyrotechnischen Vorrichtungen der Airbags und der Vorspanner der Sicherheitsgurte in einer gesicherten, in die Linie zur industriellen Verarbeitung integrierten Neutralisierungsstation (13) vernichtet werden.

6. Verfahren nach einem der vorangehenden Ansprüche, **dadurch gekennzeichnet, dass** die Windschutzscheibe und die Heckscheibe der Fahrzeuge (1) in einer zusätzlichen, in die Linie zur industriellen Verarbeitung integrierten Station (17) entfernt werden.

7. Verfahren nach Anspruch 6, **dadurch gekennzeichnet, dass** die Seitenscheiben der Fahrzeuge (1) durch Verformung des Dachs der Fahrzeuge durch Gewaltanwendung in einer gesicherten zusätzlichen Station (18) zerbrochen werden, die nach der Station (17) für das Entfernen der Windschutzscheibe und der Heckscheibe angeordnet ist.

8. Verfahren nach einem der vorangehenden Ansprüche, **dadurch gekennzeichnet, dass** gegen Ende der Linie das Dach der Fahrzeuge (1) in einer zusätzlichen Dachschneidestation geschnitten wird, und dass nach der Dachschneidestation eine zusätzliche Station für das Ausbauen der Sitze vorgesehen ist.

9. Verfahren nach Anspruch 8, **dadurch gekennzeichnet, dass** nach der Dachschneidestation eine zusätzliche Station für das Ausbauen des Armaturenbretts der Fahrzeuge (1) vorgesehen ist.

10. Verfahren nach einem der vorangehenden Ansprüche, **dadurch gekennzeichnet, dass** der Motor der Fahrzeuge (1) in einer zusätzlichen, in die Linie zur industriellen Verarbeitung integrierten Station entfernt wird.

11. Verfahren nach einem der vorangehenden Ansprüche, **dadurch gekennzeichnet, dass** das Getriebe und die Übertragungsorgane der Fahrzeuge (1) in einer zusätzlichen, in die Linie zur industriellen Verarbeitung integrierten Station entfernt werden.

12. Verfahren nach einem der Ansprüche 3 bis 11, **dadurch gekennzeichnet, dass** das Fahrzeug in der Beladestation (3) auf zwei lösbare transversale Stützbalken (11) angeordnet wird, die auf der Plattform (9) ruhen und verwendet werden, um das Fahrzeug (1) in Zusammenarbeit mit zwei Hubsäulen (21), die sich dann auf der einen und der anderen Seite der Plattform (9) befinden, in die Station für die Rückgewinnung der Fluide (6) zu setzen.

## Claims

1. A method for managing a line for industrial treatment of end-of-life vehicles (1) which comprises at least the following stations positioned in series:
- a station (3) for individually loading the vehicles (1) on a conveyor (2);
- a station (4) for removing the battery;
- a station (5) for removing the wheels;
- a station (6) for decontaminating the fluids;
- a station (7) for removing the catalytic converter and/or the particle filter;
- a station (8) for unloading the vehicles (1) from the conveyor (2) with view to compression or milling
**characterized in that**
each station (3 to 8) is adapted for treating a determined number n of vehicles (1) per hour, and that the station for decontaminating fluids (6) consists of a sufficient number x of stations of the same kind positioned in parallel for ensuring together the treatment of n vehicles per hour so as to obtain a substantially regular treatment rate of the vehicles on the whole of the line.

2. The method according to claim 1, **characterized in that** said number x of stations of the same kind which make up the station for decontaminating the fluids (6) is calculated from the average time required for treating a vehicle in a station for decontaminating the fluids, as compared with the longest average time for treating a vehicle in each of the other stations (3 to 5, 7 to 8) of the line.

3. The method according to any of the preceding claims, **characterized in that** each vehicle (1) is at the loading station (3) positioned on a platform (9) of said conveyor (2) which may be displaced from the loading station (3) as far as the unloading station (8) for the vehicles (1).

4. The method according to claim 3, **characterized in that** immediately before the station for decontaminating the fluids (6), the platform (9) is positioned on an interconveyor traverser (12) moving in the transverse direction relatively to a portion of the line immediately downstream for transferring the platform (9) with a vehicle (1) which has to be treated in a free station from among the stations for decontaminating the fluids (6) positioned in parallel, and for receiving a platform (9) with a vehicle (1) treated in a station for decontaminating the fluids (6) for transferring the platform (9) to a portion of the line found downstream from the station for decontaminating the fluids (6).

5. The method according to any of the preceding claims, **characterized in that** the pyrotechnic devices of the airbags and of the pre-tensioners of the safety belts are destroyed in a secured neutralization station (13) integrated into the industrial treatment line.

6. The method according to any of the preceding claims, **characterized in that** the windscreen and the rear window of the vehicles (1) are removed in an additional station (17) integrated into the industrial treatment line.

7. The method according to claim 6, **characterized in that** the lateral windows of the vehicles (1) are burst by sudden deformation of the roof of the vehicles in a secured additional station (18) positioned downstream from the station (17) for removing the windscreen and the rear window.

8. The method according to any of the preceding claims, **characterized in that** towards the end of the line, the roof of the vehicles (1) is cut out in an additional roof cutting station, and **in that** said additional station for removing the seats is provided downstream from the roof cutting station.

9. The method according to claim 8, **characterized in that** an additional station for removing the dashboard of the vehicles (1) is provided downstream from the roof cutting station.

10. The method according to any of the preceding claims, **characterized in that** the engine of the vehicles (1) is removed in an additional station integrated into the industrial treatment line.

11. The method according to any of the preceding claims, **characterized in that** the gearbox and the ower train components of the vehicles (1) are removed in an additional station integrated into the industrial treatment line.

12. The method according to any of claims 3 to 11, **characterized in that** the vehicle is in the loading station (3) positioned on two removable transverse supporting beams (11) resting on the platform (9) and used for lifting the vehicle (1) in the station for decontaminating the fluids (6) by cooperating with two lifting columns (21) then found on either side of the platform (9).
